(19) Europäisches Patentamt / European Patent Office / Office européen des brevets

(11) **EP 3 533 909 B1**

(12) **EUROPEAN PATENT SPECIFICATION**

(45) Date of publication and mention
of the grant of the patent:
**14.06.2023  Bulletin 2023/24**

(21) Application number: **17864113.0**

(22) Date of filing: **25.09.2017**

(51) International Patent Classification (IPC):
**D01F 8/06** *(2006.01)*     **D01F 8/10** *(2006.01)*
**D01F 8/14** *(2006.01)*     **D01F 6/46** *(2006.01)*

(52) Cooperative Patent Classification (CPC):
**D01F 6/46; D01F 8/06; D01F 8/10; D01F 8/14**

(86) International application number:
**PCT/JP2017/034409**

(87) International publication number:
**WO 2018/079152 (03.05.2018 Gazette 2018/18)**

(54) **POLYMER ALLOY FIBER AND FIBER STRUCTURE FORMED FROM SAME**

POLYMERLEGIERUNGSFASER UND DARAUS GEFORMTE FASERSTRUKTUR

FIBRES D'ALLIAGE POLYMÈRE, ET STRUCTURE DE FIBRES CONSTITUÉE DE CELLES-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.10.2016   JP 2016208645**

(43) Date of publication of application:
**04.09.2019   Bulletin 2019/36**

(73) Proprietor: **Toray Industries, Inc.**
**Tokyo 103-8666 (JP)**

(72) Inventors:
• **KANO, Hidekazu**
**Mishima-shi**
**Shizuoka 411-8652 (JP)**

• **NAGAO, Masashi**
**Mishima-shi**
**Shizuoka 411-8652 (JP)**
• **MOCHIZUKI, Katsuhiko**
**Mishima-shi**
**Shizuoka 411-8652 (JP)**

(74) Representative: **Kador & Partner Part mbB**
**Corneliusstraße 15**
**80469 München (DE)**

(56) References cited:
**WO-A1-2013/141033      WO-A1-2017/154665**
**JP-A- 2011 202 289      JP-A- 2011 202 289**
**US-A1- 2010 003 882      US-A1- 2015 051 308**

**Description**

TECHNICAL FIELD

The present invention relates to a polymer alloy fiber. More specifically, it relates to a polymer alloy fiber having both good properties of polyolefin and those of polyester, having a depressed variation in fiber diameter among single fibers, being excellent in mechanical properties and wear resistance, suffering from few dyeing specks, and being suitable as a fiber structure.

BACKGROUND ART

Polyolefins are lightweight and excellent in wear resistance, heat retention, water repellency, and the like, whereas polyesters are excellent in heat resistance, mechanical properties, dyeability, chemical resistance, and the like, and accordingly, both polyolefins and polyesters are in wide use as materials for moldings such as fibers and films.

The use of a polymer alloy, which is formed of different kinds of polymers, provides an effective way for developing a new material because the component polymers can compensate for shortcomings of each other while making the best use of their own good properties. If the component polymers are low in compatibility with each other, however, not only the polymer alloy will fail to show improved effects, but also it can cause problems such as deterioration in mechanical characteristics and a decrease in wear resistance. Therefore, when using a polymer alloy containing component polymers with low mutual compatibility, it will necessary to take some measures to improve their compatibility.

Patent document 1, for example, proposes a nonwoven fabric of a polymer alloy formed of polyethylene terephthalate and polypropylene.

in Patent document 2, which deals with a polymer alloy of an aliphatic polyester and a polyolefin, their compatibility is increased by adding an acid or a polyolefin that contains an epoxy group as a compatibilizer in order to propose moldings having a good balance among physical properties such as impact resistance and bending elastic modulus.

PRIOR ART DOCUMENTS

PATENT DOCUMENTS

Patent document 1: Japanese Unexamined Patent Publication (Kokai) No. HEI 5-51852
Patent document 2: Japanese Unexamined Patent Publication (Kokai) No. 2006-77063
Patent document 3: Japanese Patent Publication (TORAY INDUSTRIES) No. 2011-202289

SUMMARY OF INVENTION

PROBLEMS TO BE SOLVED BY THE INVENTION

However, although the method proposed in Patent document 1 is effective for producing nonwoven fabrics by meltblowing, they are poor in mechanical characteristics and wear resistance and inferior in quality due to significant dyeing specks because the compatibility between polyethylene terephthalate and polypropylene is so low that the resulting long fibers have a large fiber diameter variation among single fibers.

Although the method proposed in Patent document 2 can serve for easy production of moldings by injection molding, the compatibility between aliphatic polyester and polyolefin is so insufficient that fibers produced by melting spinning will have large fiber diameter variations among single fibers, and accordingly, it is necessary to take measures for further improvements relating to mechanical characteristics, wear resistance and dyeing specks.

Patent document D3 is concerned with a polymer alloy fiber having a sea-island structure formed from an island component of a polylactic acid-based resin (PLA) and a sea component of a polypropylene-based resin (PP).

An object of the present invention is to solve the above problems with the conventional techniques to provide a polymer alloy fiber having both good properties of polyolefin and those of polyester, having a depressed variation in fiber diameter among single fibers, being excellent in mechanical properties and wear resistance, suffering from few dyeing specks, and being suitable as a fiber structure.

MEANS OF SOLVING THE PROBLEMS

The above object of the present invention can be met by a polymer alloy fiber including a polyolefin (A), a polyester (B), and a styrene - ethylene - butylene - styrene copolymer (C), having a fiber diameter CV% of 0.1% to 2.5%, and containing an island component with a dispersion diameter of 1 to 1000 nm in the fiber's transverse cross section.
in addition, the styrene - ethylene - butylene - styrene copolymer (C) preferably accounts for 0.1 to 30.0 parts by weight relative to the total quantity, which accounts for 100 parts by weight, of the polyolefin (A), the polyester (B), and the styrene - ethylene - butylene - styrene copolymer (C).
In addition, it is preferable that the styrene - ethylene - butylene - styrene copolymer (C) contains 15.0 to 45.0 parts by weight of a styrene block (C1), that an ethylene block (C2) and a butylene block (C3) are contained at a weight ratio (C2/C3) of 0.1 to 1.0, and that at least one functional group selected from the group consisting of anhydride groups, amino groups, and imino groups is contained.
It is preferable for the polyester (B) to be composed mainly of a dicarboxylic acid component (B1) and a diol component (B2), wherein the dicarboxylic acid component (B1) is preferably at least one selected from the group consisting of an aliphatic dicarboxylic acid (B1-1), an alicyclic dicarboxylic acid (B1-2), and an aromatic dicarboxylic acid (B1-3), whereas the diol component (B2) is preferably at least one selected from the group consisting of an aliphatic diol (B2-1), an alicyclic diol (B2-2), and an aromatic diol (B2-3). It is also preferable that the main constituent component of the polyester (B) is one selected from the group consisting of an aliphatic hydroxycarboxylic acid, an alicyclic hydroxycarboxylic acid, and an aromatic hydroxycarboxylic acid.
It is preferable for the polymer alloy fiber to have a sea-island structure in which the polyolefin (A) is the sea component while the polyester (B) is the island component.
The present invention can be applied favorably to the production of a fibrous structure formed at least partly of the above polymer alloy fiber.

ADVANTAGEOUS EFFECTS OF THE INVENTION

The present invention can provide a polymer alloy fiber having both good properties of polyolefin and those of polyester, having a depressed variation in fiber diameter among single fibers, being excellent in mechanical properties and wear resistance, and suffering from few dyeing specks. When used in the form of a fiber structure, a polymer alloy fiber that can be produced according to the present invention can be adopted suitably for uses where conventional polyolefin based fiber or polyester based fibers are applied, particularly for uses where high quality is required.

DESCRIPTION OF PREFERRED EMBODIMENTS

The polymer alloy fiber according to the present invention is a polymer alloy fiber including a polyolefin (A), a polyester (B), and a styrene - ethylene - butylene - styrene copolymer (C), having a fiber diameter CV% of 0.1% to 2.5%, and containing an island component with a dispersion diameter of 1 to 1000 nm in the fiber's transverse cross section.
As described above in the section "BACKGROUND ART", polyolefins are lightweight and excellent in wear resistance, heat retention, water repellency, and the like, whereas polyesters are excellent in heat resistance, mechanical properties, dyeability, chemical resistance, and the like. Accordingly, the polymer alloy fiber according to the present invention that contains a combination of a polyolefin (A) and a polyester (B) has both the good properties of polyolefins and those of polyesters. As a result of intensive studies on methods to improve the compatibility between the polyolefin (A) and the polyester (B), which serve to solve the conventional problems, the inventors found that the compatibility is improved dramatically when a styrene - ethylene - butylene - styrene copolymer (C) is used as a compatibilizer. As a result, they were able to produce a polymer alloy fiber that is small in the unevenness in fiber diameter among single fibers in a multifilament yarn and also small in the island component's dispersion diameter in the fiber's transverse cross section, leading to successful improvement in mechanical characteristics and wear resistant and reduction of dyeing specks.
For the present invention, a polymer alloy fiber is one that contains island component domains in a discontinuously dispersed state. Here, the term "island component domains in a discontinuously dispersed state" means that each island component domain has an appropriate length, specifically several tens to several hundreds of thousands of nanometers, in the fiber's length direction to allow the sea-island structure to show different features in sections perpendicular to the fiber axis, i.e., fiber's transverse cross sections, located at random intervals along one single fiber. The discontinuous state of the island component used for the present invention can be determined by the method described in Examples. If the island component domains are located in a discontinuously dispersed state, the specific interfacial area of the sea island interface can be increased, thereby serving to depress boundary separation and produce a polymer alloy fiber having good mechanical characteristics and wear resistance. Furthermore, the depression of boundary separation works, in addition dying step, to control the decrease in color development performance due to increased light scattering that may result from boundary separation, leading to vivid, deep color development. Thus, the polymer alloy fiber according to the present invention is essentially different from the sheath-core composite fiber in which one island extends continuously in the fiber axis direction in an identical shape or the sea-island composite fiber in which a plurality of islands having identical shapes are located continuously in the fiber axis direction. Such a polymer alloy fiber can be obtained for example at an appropriate stage before the completion of melt spinning when molding a polymer alloy composition formed by kneading the polyolefin (A), the polyester (B), and the styrene - ethylene - butylene - styrene copolymer (C).

Examples of the polyolefin (A) to use for the present invention include, but not limited to, polyethylene, polypropylene, polybutene-1, and polymethylpentene. In particular, polypropylene is preferable because of high molding processability and good mechanical characteristics, whereas polymethylpentene is preferable because of high melting point, high heat resistance, and high lightness due to its lower specific gravity than any other polyolefins. Polypropylene is particularly preferred for clothing applications.

For the present invention, the polyolefin (A) may be either a homopolymer or a copolymer with another α-olefin. Such a copolymer may contain only one or a plurality of other α-olefins (hereinafter occasionally referred to simply as α-olefins).

Such an α-olefin preferably contains 2 to 20 carbon atoms and the molecular chain of the α-olefin may be either a straight chain or a branched chain. Specific examples of these α-olefins include, but not limited to, ethylene, propylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 3-methyl-1-pentene, 3-ethyl-1-pentene, and 3-ethyl-1-hexene.

The α-olefin copolymerization ratio is preferably 20 mol% or less. An α-olefin copolymerization ratio of 20 mol% or less is preferable because it enables the production of a polymer alloy fiber having good mechanical characteristics and high heat resistance. The α-olefin copolymerization ratio is more preferably 15 mol% or less and still more preferably 10 mol% or less.

For the present invention, it is preferable for the polyester (B) to be composed mainly of a dicarboxylic acid component (B1) and a diol component (B2), wherein the dicarboxylic acid component (B1) is preferably at least one selected from the group consisting of an aliphatic dicarboxylic acid (B1-1), an alicyclic dicarboxylic acid (B1-2), and an aromatic dicarboxylic acid (B1-3), whereas the diol component (B2) is preferably at least one selected from the group consisting of an aliphatic diol (B2-1), an alicyclic diol (B2-2), and an aromatic diol (B2-3). It is also preferable that the main constituent component of the polyester (B) is one selected from the group consisting of an aliphatic hydroxycarboxylic acid, an alicyclic hydroxycarboxylic acid, and an aromatic hydroxycarboxylic acid. In particular, the aromatic dicarboxylic acid (B1-3), the aromatic diol (B2-3), and the aromatic hydroxycarboxylic acid are preferable because they work to improve the compatibility between the polyolefin (A) and the polyester (B) as a result of interaction with the aromatic ring in the styrene block (C1) in the styrene - ethylene - butylene - styrene copolymer (C), making it possible to produce a polymer alloy fiber having good mechanical characteristics and high wear resistance.

For the present invention, specific examples of the aliphatic dicarboxylic acid (B1-1) include, but not limited to, malonic acid, fumaric acid, maleic acid, succinic acid, itaconic acid, adipic acid, azelaic acid, sebacic acid, 1,11-undecane dicarboxylic acid, 1,12-dodecane dicarboxylic acid, 1,14-tetradecane dicarboxylic acid, 1,18-octadecane dicarboxylic acid, and dimer acid; specific examples of the alicyclic dicarboxylic acid (B1-2) include, but not limited to, 1,2-cyclohexanedicarboxylic acid, 1,3-cyclohexanedicarboxylic acid, 1,4-cyclohexanedicarboxylic acid, decalin-2,6-dicarboxylic acid; and specific examples of the aromatic dicarboxylic acid (B1-3) include, but not limited to, terephthalic acid, phthalic acid, isophthalic acid, 5-sodium sulfoisophthalic acid, 1,5-naphthalene dicarboxylic acid, 2,6-naphthalene dicarboxylic acid, 2,2'-biphenyl dicarboxylic acid, 3,3'-biphenyl dicarboxylic acid, 4,4'-biphenyl dicarboxylic acid, and anthracene dicarboxylic acid. Specific examples of the aliphatic diol (B2-1) include, but not limited to, ethylene glycol, trimethylene glycol, tetramethylene glycol, hexamethylene glycol, diethylene glycol, polyethylene glycol, polypropylene glycol, and neopentyl glycol; specific examples of the alicyclic diol (B2-2) include, but not limited to, 1,2-cyclohexanedimethanol, 1,3-cyclohexanedimethanol, 1,4-cyclohexanedimethanol, spiroglycol, and isosorbide; and specific examples of the aromatic diol (B2-3) include, but not limited to, catechol, naphthalene diol, and bisphenol. Furthermore, specific examples of the aliphatic hydroxycarboxylic acid include, but not limited to, lactic acid, glycolic acid, α-oxyisobutyric acid, β-oxyisobutyric acid, oxypivalic acid; and specific examples of the aromatic hydroxycarboxylic acid include, but not limited to, salicylic acid, m-oxybenzoic acid, p-oxybenzoic acid, mandelic acid, and atrolactic acid.

Specific examples of the polyester (B) to use for the present invention include, but not limited to, polyethylene terephthalate, polypropylene terephthalate, polybutylene terephthalate, polyhexamethylene terephthalate, polyethylene naphthalate, polyethylene adipate, polypropylene adipate, polybutylene adipate, polyethylene succinate, polypropylene succinate, polybutylene succinate, polyethylene sebacate, polypropylene sebacate, polybutylene sebacate, polycaprolactone, polylactic acid, and polyglycolic acid.

The polyester (B) to use for the present invention may be copolymerized with other copolymerization components and specific examples thereof include, but not limited to, the aforementioned aliphatic dicarboxylic acid (B1-1), alicyclic dicarboxylic acid (B1-2), aromatic dicarboxylic acid (B1-3), aliphatic diol (B2-1), alicyclic diol (B2-2), aromatic diol (B2-3), aliphatic hydroxycarboxylic acid, alicyclic hydroxycarboxylic acid, and aromatic hydroxycarboxylic acid. In particular, the aromatic dicarboxylic acid (B1-3), the aromatic diol (B2-3), and the aromatic hydroxycarboxylic acid are preferable because they work to improve the compatibility between the polyolefin (A) and the polyester (B) as a result of interaction with the aromatic ring in the styrene block (C1) in the styrene - ethylene - butylene - styrene copolymer (C), making it possible to produce a polymer alloy fiber having good mechanical characteristics and high wear resistance. These copolymerization components may be used singly, or two or more thereof may be used in combination.

For the polymer alloy fiber according to the present invention, the polyolefin (A) and the polyester (B) may account for appropriately selected proportions in the total quantity, which accounts for 100 parts by weight, of the polyolefin (A), the polyester (B), and the styrene - ethylene - butylene - styrene copolymer (C). When the content of the polyolefin (A) is larger than that of the polyester (B), the polyolefin (A) will be the sea component and the polyester (B) will be the island component in the resulting sea-island structure, whereas when the content of the polyester (B) is larger than that of the polyolefin (A), the polyester (B) will be the sea component and the polyolefin (A) will be the island component in the resulting sea-island structure. Since the polyolefin (A) is higher in wear resistance than the polyester (B), it is preferable from the viewpoint of wear resistance to adopt a sea-island structure in which the polyolefin (A) is the sea component while the polyester (B) is the island component.

The polymer alloy fiber according to the present invention contains a styrene - ethylene - butylene - styrene copolymer (C). Being high in affinity with both the polyolefin (A) and the polyester (B), the styrene - ethylene - butylene - styrene copolymer (C) can function as a compatibilizer. Accordingly, the compatibility between the polyolefin (A) and the polyester (B) will be improved to ensure easier control and improved dispersibility of the dispersion state, leading to improved interfacial adhesion between the polyolefin (A) and the polyester (B). When a sea-island structure is formed by melt spinning, a swell called Barus will be formed immediately below the spinning nozzle to make the thinning deformation of the fiber unstable, but the incorporation of the styrene - ethylene - butylene - styrene copolymer (C) will serve to decrease the swelling of the ballas, leading to a decrease of the resulting thread breakages etc. to ensure improved yarn-making workability. It also serves to produce a high quality fiber and fiber structure that are small in the unevenness in fiber diameter and fineness in the fiber's length direction and high in the uniformity among single fibers in the multifilament yarn and the uniformity in the fiber's length direction. Here, the styrene - ethylene - butylene - styrene copolymer (C) in the polymer alloy fiber according to the present invention are located along the interface between the polyolefin (A) and the polyester (B) and in the regions containing the polyolefin (A) alone and the regions containing the polyester (B) alone, but the effect described above will be realized strongly when it exists a lot along the interface between the two components.

For the present invention, it is preferable for the styrene - ethylene - butylene - styrene copolymer (C) to contain 15.0 to 45.0 parts by weight of the styrene block (C1). The styrene block (C1) preferably accounts for 15.0 parts by weight or more, because in that case, the styrene - ethylene - butylene - styrene copolymer (C) will have good mechanical characteristics including high strength and high elongation percentage, and accordingly, the styrene - ethylene - butylene - styrene copolymer (C) existing along the sea-island interface will contribute to improvement in mechanical characteristics including strength and elongation percentage when an external force such as tensile stress is applied to the fiber, making it possible to produce a polymer alloy fiber having good mechanical characteristics. It is more preferable for the styrene block (C1) to account for 20.0 parts by weight or more, more preferably 25.0 parts by weight or more. On the other hand, the styrene block (C1) preferably accounts for 45 parts by weight or less, because in that case, the styrene - ethylene - butylene - styrene copolymer (C) will be flexible, and accordingly, if a strain occurs at the sea-island interface due to an external force such as abrasion applied to the fiber, the styrene - ethylene - butylene - styrene copolymer (C) will deform in conformity with the strain to prevent boundary separation, making it possible to produce a polymer alloy fiber having high wear resistance. It is more preferable for the styrene block (C1) to account for 40.0 parts by weight or less, more preferably 35 parts by weight or less.

For the styrene - ethylene - butylene - styrene copolymer (C) to use for the present invention, the weight ratio (C2/C3) between the ethylene block (C2) and the butylene block (C3) is preferably 0.1 to 1.0. The weight ratio (C2/C3) is preferably 0.1 or more, because in that case, the styrene - ethylene - butylene - styrene copolymer (C) will be flexible, and accordingly, if a strain occurs at the sea-island interface due to an external force such as abrasion applied to the fiber, the styrene - ethylene - butylene - styrene copolymer (C) will deform in conformity with the strain to prevent boundary separation, making it possible to produce a polymer alloy fiber having high wear resistance. The weight ratio (C2/C3) is more preferably 0.15 or more and still more preferably 0.25 or more. On the other hand, the weight ratio (C2/C3) is preferably 1.0 or less, because in that case, the affinity with the polyolefin (A) will be high and the compatibility between the polyolefin (A) and the polyester (B) will also be high, making it possible to produce a high quality fiber or fiber structure that is low in the unevenness in fiber diameter and fineness, high in the uniformity among single fibers in the multifilament yarn, and high in the uniformity in the fiber's length direction. The weight ratio (C2/C3) is more preferably 0.7 or less and still more preferably 0.5 or less.

The styrene - ethylene - butylene - styrene copolymer (C) to use for the present invention preferably contains at least one functional group selected from the group consisting of anhydride groups, carboxyl groups, hydroxyl groups, epoxy groups, amino groups, and imino groups. Being high in affinity with the polyester (B) and reactive with the polyester (B), these functional groups serve to increase the interfacial adhesion between the polyolefin (A) and the polyester (B) to ensure far improved mechanical characteristics and wear resistance, and in addition, the compatibility between the polyolefin (A) and the polyester (B) will also increase, making it possible to produce a high quality fiber or fiber structure that is low in the unevenness in fiber diameter and fineness, high in the uniformity among single fibers in the multifilament yarn, and high in the uniformity in the fiber's length direction. Of these, amino groups and imino groups are preferable because they are high in reactivity with the polyester (B), and amino groups are particularly preferable.

For the polymer alloy fiber according to the present invention, the styrene - ethylene - butylene - styrene copolymer (C) preferably accounts for 0.1 to 30.0 parts by weight relative to the total quantity, which accounts for 100 parts by weight, of the polyolefin (A), the polyester (B), and the styrene - ethylene - butylene - styrene copolymer (C). The styrene - ethylene - butylene - styrene copolymer (C) preferably accounts for 0.1 parts by weight or more, because in that case, the compatibility between the polyolefin (A) and the polyester (B) will increase and accordingly, the dispersion diameter of the island component domains will decrease to ensure improved yarn-making workability due to decreased thread breakages etc. in addition, it also serve to produce a high quality fiber or fiber structure that is low in fineness unevenness, high in uniformity in the fiber's length direction, good in mechanical properties and wear resistance, and low in dyeing unevenness. It is more preferable for the styrene - ethylene - butylene - styrene copolymer (C) to account for 0.3 parts by weight or more, more preferably 0.5 parts by weight or more. On the other hand, the styrene - ethylene - butylene - styrene copolymer (C) accounts for 30.0 parts by weight or less, because it serves to maintain fiber characteristics, appearance, texture, etc., that are attributed to the polyolefin (A) and the polyester (B) contained in the polymer alloy fiber. It is also preferable because it serves to depress the destabilization in yarn-making workability that may be caused by the styrene - ethylene - butylene - styrene copolymer (C) if added excessively. The styrene - ethylene - butylene - styrene copolymer (C) more preferably accounts for 20.0 parts by weight or less, still more preferably 10.0 parts by weight or less, and particularly preferably 5.0 parts by weight or less.

The polymer alloy fiber according to the present invention may be one that has been modified through various methods by adding minor additives. Specific examples of such minor additives include, but not limited to, plasticizer, antioxidant, ultraviolet absorber, infrared ray absorbent, fluorescent brightening agent, mold releasing agent, antibacterial agent, nuclear formation agent, thermal stabilizer, antistatic agent, color protection agent, adjustor, delustering agent, antifoam agent, antiseptic agent, gelatinizer, latex, filler, ink, coloring agent, dye, pigments, and perfume. These minor additives may be used singly, or two or more thereof may be used in combination.

There are no specific limitations on the fineness of the polymer alloy fiber according to the present invention in a multifilament form, which therefore may be adjusted appropriately to suite particular uses and required characteristics, but it is preferably 10 to 3,000 dtex. For the present invention, the fineness is determined by the method described in Examples. The polymer alloy fiber preferably has a fineness of 10 dtex or more because in that case, it ensures low thread breakage frequency and high process-passing capability and the fiber will not suffer significant fuzzing while in service, leading to high durability. The fineness of the polymer alloy fiber is more preferably 30 dtex or more, still more preferably 50 dtex or more. On the other hand, the polymer alloy fiber preferably has a fineness of 3,000 dtex or less, because in that case, the fiber and fibrous structure will not suffer a decrease in flexibility. The fineness of the polymer alloy fiber is more preferably 2,500 dtex or less, still more preferably 2,000 dtex or less.

There are no specific limitations on the single fiber fineness of the polymer alloy fiber according to the present invention, which therefore may be adjusted appropriately to suite particular uses and required characteristics, but it is preferably 0.5 to 20 dtex. For the present invention, the single fiber fineness is calculated by dividing the fineness measured by the method described in Examples by the number of single fibers. The polymer alloy fiber preferably has a single fiber fineness of 0.5 dtex or more, because in that case, it ensures low thread breakage frequency and high process-passing capability and the fiber will not suffer significant fuzzing while in service, leading to high durability. The single fiber fineness of the polymer alloy fiber is more preferably 0.6 dtex or more, still more preferably 0.8 dtex or more. On the other hand, the polymer alloy fiber preferably has a single fiber fineness of 20 dtex or less, because in that case, the resulting fiber and fibrous structure will not suffer a decrease in flexibility. The single fiber fineness of the polymer alloy fiber is more preferably 15 dtex or less, still more preferably 12 dtex or less.

There are no specific limitations on the strength of the polymer alloy fiber according to the present invention, which therefore may be adjusted appropriately to suite particular uses and required characteristics, but it is preferably 1.0 to 6.0 cN/dtex from the viewpoint of mechanical properties. For the present invention, the strength is determined by the method described in Examples. The strength of the polymer alloy fiber is preferably 1.0 cN/dtex or more, because in that case, the fiber will not suffer significant fuzzing while in service, leading to high durability. The strength of the polymer alloy fiber is more preferably 1.5 cN/dtex or more, still more preferably 2.0 cN/dtex or more. On the other hand, the polymer alloy fiber preferably has a strength of 6.0 cN/dtex or less, because in that case, the resulting fiber and fibrous structure will not suffer a decrease in flexibility.

There are no specific limitations on the elongation percentage of the polymer alloy fiber according to the present invention, which therefore may be adjusted appropriately to suite particular uses and required characteristics, but it is preferably 10% to 60% from the viewpoint of durability. For the present invention, the elongation percentage is determined by the method described in Examples. The polymer alloy fiber preferably has an elongation percentage of 10% or more, because in that case, it allows the production of a fiber or fibrous structure having high wear resistance, suffering from little fuzzing when in service, and showing high durability. The elongation percentage of the polymer alloy fiber is more preferably 15% or more, still more preferably 20% or more. On the other hand, the polymer alloy fiber preferably has an elongation percentage of 60% or less, because in that case, it enables the production of a fiber and fibrous structure with high dimensional stability. The elongation percentage of the polymer alloy fiber is more preferably 55% or less, still more preferably 50% or less.

The polymer alloy fiber according to the present invention preferably has a fineness variation, U% (hi), of 0.1% to 1.5%. For the present invention, the fineness variation U% (hi) is determined by the method described in Examples. The fineness variation U% (hi) is an indicator of the thickness unevenness of a multifilament yarn in the fiber's length direction and a smaller fineness variation U% (hi) means a smaller thickness unevenness in the fiber's length direction. The fineness variation, U% (hi), is preferably as small as possible from the viewpoint of process-passing capability and product quality, but the manufacturability based lower limit is 0.1%. On the other hand, the fineness variation U% (hi) of the polymer alloy fiber is preferably 1.5% or less, because in that case, it enables the production of a high quality fiber and fibrous structure that is high in uniformity in the fiber's length direction, low in liability to fuzzing or thread breakage, and suitable for production of a dyed material with few defects such as dyeing unevenness and dyeing streaks. The fineness variation, U% (hi), of the polymer alloy fiber is more preferably 1.2% or less, still more preferably 1.0% or less, particularly preferably 0.8% or less.

The polymer alloy fiber according to the present invention has a fiber diameter CV% of 0.1% to 2.5%. For the present invention, the fiber diameter CV% is determined by the method described in Examples. The fiber diameter CV% is an indicator of the unevenness in fiber diameter among the single fibers in a multifilament yarn, and a smaller fiber diameter CV% means a smaller unevenness in fiber diameter among the single fibers. The fiber diameter CV% is preferably as small as possible from the viewpoint of process-passing capability and product quality, but the manufacturability based lower limit is 0.1%. On the other hand, the fiber diameter CV% of the polymer alloy fiber is preferably 2.5% or less, because in that case, it enables the production of a high quality fiber and fibrous structure that is high in the uniformity in fiber diameter among single fibers, low in liability to fuzzing or thread breakage, and suitable for production of a dyed material with few defects such as dyeing unevenness and dyeing streaks. The fiber diameter CV% of the polymer alloy fiber is more preferably 2.0% or less, still more preferably 1.5% or less, particularly preferably 1.0% or less.

In the polymer alloy fiber according to the present invention, the island component domains have dispersion diameters of 1 to 1,000 nm when observed in the fiber's transverse cross section. For the present invention, the dispersion diameter of the island component domains in the fiber's transverse cross section is determined by the method described in Examples. The dispersion diameter of the island component domains in the fiber's transverse cross section is preferably as small as possible from the viewpoint of yarn-making performance, process-passing capability, mechanical characteristics, and wear resistance, but in the case of a polymer alloy fiber formed of the polyolefin (A) and the polyester (B), which are small in mutual compatibility, the manufacturability based lower limit is 1 nm. On the other hand, if the dispersion diameter of the island component domains in the fiber's transverse cross section of the polymer alloy fiber is 1,000 nm or less, the specific interfacial area of the sea-island interface can be increased to ensure reduced boundary separation and abrasion attributed thereto, leading to good mechanical characteristics and high wear resistance and to dyed products which are less liable to deterioration in color development performance due to increased scattering light that is attributed to boundary separation. For the polymer alloy fiber, the dispersion diameter of the island component domains in the fiber's transverse cross section is preferably 700 nm or less, still more preferably 500 nm or less, and particularly preferably 300 nm or less.

In the polymer alloy fiber according to the present invention, the island component domains have a fiber diameter CV% of 1% to 50% when observed in the fiber's transverse cross section. For the present invention, the dispersion diameter CV% of the island component domains in the fiber's transverse cross section is determined by the method described in Examples. The dispersion diameter CV% is an indicator of the unevenness in dispersion diameter of the island component domains in the fiber's transverse cross section, and a smaller dispersion diameter CV% means a smaller unevenness in dispersion diameter of the island component domains. The dispersion diameter CV% is preferably as small as possible from the viewpoint of yarn-making performance, process-passing capability, mechanical characteristics, and wear resistance, but the manufacturability based lower limit is 1%. On the other hand, the polymer alloy fiber preferably has a dispersion diameter CV% of 50% or less, because in that case, the local stress concentration that may be caused by an external force applied to the fiber will be depressed and boundary separation will not occur easily to ensure a high wear resistance, making it possible to produce a high quality fiber or fiber structure. The dispersion diameter CV (%) of the polymer alloy fiber is more preferably 40% or less, still more preferably 30% or less, particularly preferably 20% or less.

There are no specific limitations on the fiber's cross-sectional shape of the polymer alloy fiber according to the present invention, and an appropriate one may be selected to suit particular uses and required characteristics. It may be either a perfect circular cross section or a non-circular cross section. Specific examples of such non-circular shapes include, but not limited to, multilobar, polygonal, flattened, elliptic, C-shaped, H-shaped, S-shaped, T-shaped, W-shaped, X-shaped, Y-shaped, grid-like, double-crossed, and hollow.

There are no specific limitations on the form of the polymer alloy fiber according to the present invention, which therefore may be in the form of monofilament, multifilament, staple, etc.

As in the case of other general fibers, the polymer alloy fiber according to the present invention may be processed by, for example, false-twisting and twining, and may also be woven or knitted by methods generally used for fibers.

There are no specific limitations on the form of the fibrous structure to be produced from the polymer alloy fiber according to the present invention, which therefore may be processed by generally known methods into, for example, woven fabric, knitted fabric, pile fabric, nonwoven fabric, spun yarn, and wadding. A fibrous structure to be produced from the polymer alloy fiber according to the present invention may be of any weave or knit structure and may preferably be processed by plain weaving, diagonal weaving, sateen weaving, or their modified weaving techniques, or warp knitting, weft knitting, circular knitting, lace stitching, or their modified knitting techniques.

The polymer alloy fiber according to the present invention may be combined with other types of fiber by interweaving or interknitting as it is processed into a fibrous structure or combined with other types of fiber to form a combined filament yarn before it is processed into a fibrous structure.

Next, the production method for the polymer alloy fiber according to the present invention is described below.

The generally known melt-spinning technique, stretching technique, or false twisting technique can be used as a production technique for the polymer alloy fiber according to the present invention.

For the present invention, it is preferable that the polyolefin (A), the polyester (B), and the styrene - ethylene - butylene - styrene copolymer (C) are dried to a water content of 0.3 wt% or less before starting the melt spinning step. A water content of 0.3 wt% or less is preferable because in that case, foam formation is prevented from being caused by water during the melt spinning step, allowing the spinning to be performed stably. It is preferable also because hydrolysis can be prevented during the spinning step to prevent the resulting polymer alloy fiber from suffering from deterioration in mechanical characteristics or a decline in color tone. The water content is more preferably 0.2 wt% or less and still more preferably 0.1 wt% or less.

When polymer alloy type spinning is to be performed, useful methods for discharging the melt through a spinning nozzle to provide a fiber thread include, but not limited to, those described below. As a first example, the polyolefin (A), the polyester (B), the styrene - ethylene - butylene - styrene copolymer (C) are melt-kneaded in an extruder etc. to prepare composite chips, which are then dried as required, followed by supplying the dried chips to a melt spinning machine, where they are melted, and weighing the melt by a measuring pump. Subsequently, it is introduced into the spinning pack heated in the spinning block and the molten polymer is filtered in the spinning pack and then discharged through a spinning nozzle to provide a fiber thread. As a second example, chips are dried as required and the polyolefin (A), the polyester (B), the styrene - ethylene - butylene - styrene copolymer (C) in the form of chips are mixed together, followed by supplying the mixed chips to a melt spinning machine, where they are melted, and weighing by a measuring pump. Subsequently, the molten polymer is introduced into the spinning pack heated in the spinning block, filtered in the spinning pack, and then discharged through a spinning nozzle to provide a fiber thread.

The fiber yarn discharged from the nozzle is cooled and solidified in a cooling apparatus, taken up by a first godet roller, and wound up by a winder via a second godet roller to provide a wound yarn. Here, a heating cylinder or heat insulation cylinder with a length of 2 to 50 cm may be installed below the nozzle as required to improve the yarn-making workability, productivity, and mechanical properties of the fiber. In addition, an oil feeding apparatus may be used to supply oil to the fiber yarn or an entangling machine may be used to entangle the fiber yarn.

The spinning temperature used for the melt spinning may be set appropriately to suit the melting point and heat resistance of the polyolefin (A), the polyester (B), and the styrene - ethylene - butylene - styrene copolymer (C), but it is preferably in the range of 220°C to 320°C. The spinning temperature is preferably 220°C or more, because in that case, the elongation viscosity of the fiber yarn discharged through the spinning nozzle is maintained sufficiently low to ensure stable discharge and also because the spinning tension is prevented from increasing excessively to avoid yarn breakage. The spinning temperature is more preferably 230°C or more, still more preferably 240°C or more. On the other hand, the spinning temperature is preferably 320°C or less, because in that case, heat decomposition can be depressed during the spinning step to prevent the resulting polymer alloy fiber from suffering from deterioration in mechanical properties or coloring thereof. The spinning temperature is more preferably 300°C or less, still more preferably 280°C or less.

The spinning speed in the melt spinning step may be set appropriately to suit the composite ratio and spinning temperature of the polyolefin (A) and the polyester (B), but it is preferably 500 to 6,000 m/min. The spinning speed is preferably 500 m/min or more, because in that case, the traveling of the yarn is maintained stable and yarn breakage is prevented. When such a two-step process is adopted, the spinning speed is more preferably 1,000 m/min or more, still more preferably 1,500 m/min or more. On the other hand, the spinning speed is preferably 6,000 m/min or less, because in that case, the spinning tension can be controlled to prevent yarn breakage and ensure stable spinning. When such a two-step process is adopted, the spinning speed is more preferably 4,500 m/min or less, still more preferably 4,000 m/min or less. For the spinning in a single step process in which spinning and stretching are performed simultaneously without winding up the yarn, it is preferable to use low speed rollers and high speed rollers that are set to 500 to 5,000 m/min and 2,500 to 6,000 m/min, respectively. The low speed rollers and high speed rollers are preferably operated in the above range, because in that case, the traveling yarn is maintained stable and yarn breakage is prevented to ensure stable spinning. For the spinning speed in the case of the single step process, the low speed rollers and the high speed rollers are preferably set to 1,000 to 4,500 m/min and 3,500 to 5,500 m/min, respectively, and the low speed rollers and the high speed rollers are more preferably set to 1,500 to 4,000 m/min and 4,000 to 5,000 m/min, respectively.

When stretching is carried out in the single step process or the two-step process, it may be performed by either a single stage stretching process or a multiple stage stretching process in which the yarn is stretched in two or more stages. There are no specific limitations on the heating method to use for the stretching as long as the traveling yarn can be heated directly or indirectly. Specific examples of heating methods include, but not limited to, the use of a heating roller, heating pin, heating plate, liquid bath such as warm water and hot water, gas bath such as hot air and steam, and laser. These heating methods may be used singly, or a plurality thereof may be used in combination. Favorable heating methods include contact with a heating roller, contact with a heating pin, contact with a heating plate, and immersion in a liquid bath from the viewpoint of control of the heating temperature, uniform heating of the traveling yarn, and simplification of equipment.

When stretching is carried out, the stretching temperature can be set up appropriately to suit the melting points of the polyolefin (A), the polyester (B), and the styrene - ethylene - butylene - styrene copolymer (C), and the strength and elongation percentage of the stretched fiber, but it is preferably 20°C to 150°C. The stretching temperature is preferably 20°C or more because in that case, the yarn supplied to the stretching step is preheated sufficiently and uniform thermal deformation is achieved during the stretching step to avoid fuzzing and uneven fineness distribution, thereby making it possible to provide a high quality fiber and fibrous structure having high uniformity in the fiber's length direction and high dyeing levelness. The stretching temperature is more preferably 50°C or more, still more preferably 70°C or more. The stretching temperature is preferably 150°C or less, on the other hand, because in that case, fusion bonding among fibers and heat decomposition due to contact with the heating rollers can be prevented to ensure high process passing property and quality. It is preferable also because the fiber can slip smoothly on the stretching rollers to ensure prevention of yarn breakage and stable stretching. The stretching temperature is more preferably 145°C or less, still more preferably 140°C or less. In addition, heat setting may be performed at 60°C to 150°C as required.

When stretching is carried out, the draw ratio may be set up appropriately depending on the elongation percentage of the unstretched fiber and the strength and elongation percentage of the stretched fiber, but it is preferably 1.02 to 7.0. The draw ratio is preferably 1.02 or more because in that case, such stretching can improve mechanical properties such as strength and elongation percentage of the fiber. The draw ratio is more preferably 1.2 or more, still more preferably 1.5 or more. On the other hand, the draw ratio is preferably 7.0 or less, because in that case, yarn breakage during stretching is prevented to ensure stable stretching. The draw ratio is more preferably 6.0 or less, still more preferably 5.0 or less.

When stretching is carried out, the stretching speed can be set up appropriately taking into account, for example, whether the stretching method adopts the single step process or the two-step process. When the single step process is adopted, the speed of the high speed rollers used for spinning corresponds to the stretching speed. When the two step process is adopted for stretching, the stretching speed is preferably 30 to 1,000 m/min. The stretching speed is preferably 30 m/min or more because in that case, the traveling of the yarn is maintained stable and yarn breakage is prevented. When the two step process is adopted for stretching, the stretching speed is more preferably 50 m/min or more, still more preferably 100 m/min or more. On the other hand, the stretching speed is preferably 1,000 m/min or less because in that case, yarn breakage during stretching is prevented to ensure stable stretching. When the two-step process is adopted for stretching, the stretching speed is more preferably 900 m/min or less, still more preferably 800 m/min or less.

To carry out false twisting, the so-called woolie finishing may be performed using only the first stage heater or the so-called Buleria processing may be performed using both the first stage heater and the second stage heater, either of which may be adopted appropriately.

Examples of equipment to use for the false twisting step include a false twisting apparatus equipped with FR (feed rollers), 1DR (first draw roller) heater, cooling plate, false twisting unit, 2DR (second draw roller), 3DR (third draw roller), entangling nozzle, 4DR (fourth draw roller), and winder.

The processing ratio between FR and 1DR may be appropriately set to suit the elongation percentage of the fiber to use for false twisting and the elongation percentage of the false-twisted fiber, but it is preferably in the range of 1.0 to 2.0.

The heater to use may be either a contact heating type one or a noncontact heating type one. The heater temperature may be set appropriately to suit the melting points of the polyolefin (A), the polyester (B), and the styrene - ethylene - butylene - styrene copolymer (C), and the strength and elongation percentage of the false twisted fiber, but the heater temperature is preferably 90°C or more in the case of contact heating whereas the heater temperature is preferably 150°C or more in the case of noncontact heating. The heater temperature is preferably 90°C or more in the case of contact heating whereas the heater temperature is preferably 150°C or more in the case of noncontact heating because in that case, the yarn supplied to the false twisting step is preheated sufficiently and uniform thermal deformation is achieved during the stretching step to avoid fuzzing and uneven fineness distribution, thereby making it possible to provide a high quality fiber and fibrous structure having high uniformity in the fiber's length direction and high dyeing levelness. In the case of contact heating, the heater temperature is more preferably 100°C or more, still more preferably 110°C or more. In the case of noncontact heating, the heater temperature is more preferably 200°C or more, still more preferably 250°C or more. The upper limit of the heater temperature may be appropriately set in a temperature range where the unstretched yarn or stretched yarn to use for false twisting does not undergo fusion bonding in the heater.

The false twisting apparatus is preferably a friction false twisting type one, and available apparatuses include, but not limited to, friction disk type ones and belt nip type ones. Among others, it is preferable to adopt a friction disk type apparatus, and in particular, the use of one equipped with a fully ceramic disk is preferable to ensure stable false twisting processing even if the apparatus is operated for a long period of time. The ratios between the 2DR and the 3DR and between the 3DR and the 4DR may be appropriately set to suit the strength and elongation percentage of the false-twisted fiber etc., but it is preferably 0.9 to 1.0. Between the 3DR and the 4DR, an entangling nozzle may be provided to perform entangling treatment or additional oil supply from an oil guide may be performed to improve the process-passing capability of the false-twisted yarn.

When performing a false twisting step, the processing speed may be set appropriately, but it is preferably 200 to 1,000 m/min. The processing speed is preferably 200 m/min or more because in that case, the traveling of the yarn is maintained stable and yarn breakage is prevented. The processing speed is more preferably 300 m/min or more, still more preferably 400 m/min or more. On the other hand, the processing speed is preferably 1,000 m/min or less because in that case, yarn breakage in the false twisting step is prevented to ensure stable false twisting. The processing speed is more preferably 900 m/min or less, still more preferably 800 m/min or less.

For the present invention, dyeing of either the fiber or the fiber structure may be performed as required. For the present invention, a disperse dye or a cationic dye may be adopted favorably for the dyeing. The polyolefin (A) to use as a constituent of the polymer alloy fiber according to the present invention will not be dyed significantly with a dye whereas the polyester (B) is dyeable, and accordingly, it is possible to dye the polymer alloy fiber according to the present invention and the fiber structure formed therefrom.

There are no specific limitations on the dyeing method to use for the present invention, and generally known methods may be adopted favorably including a cheese dyeing machine, jet dyeing machine, drum dyeing machine, beam dyeing machine, jigger dyeing machine, high pressure jigger dyeing machine, etc.

For the present invention, there are no specific limitations on the dye concentration and dyeing temperature, and generally known procedures can be adopted favorably. In addition, refining may also be performed as required before the dyeing step and reduction cleaning may be performed after the dyeing step.

The polymer alloy fiber according to the present invention and the fiber structure formed therefrom have both good properties of polyolefin and those of polyester, show good mechanical properties and high wear resistance, and suffer from little dyeing unevenness. Accordingly, they can be adopted suitably for uses where conventional polyolefin based fibers or polyester based fibers are applied, particularly for uses where high quality is required. For examples, such uses include, but not limited to, general clothing such as women's wear, men's wear, lining, underwear, down jackets, vests, inner garments, and outer garments; sports clothing such as wind breakers, outdoor sports wear, skiing wear, golf wear, and swimsuits; bedding such as outer fabrics of mattress, mattress covers, mattress wadding, blankets, outer fabrics of blankets, blanket covers, pillow covers, pillow wadding, and sheets; interior materials such as tablecloth, curtains, tile carpet, domestic carpets, and mats for automobiles; and other materials such as belts, bags, sewing threads, sleeping bags, tents, ropes, protective nets, filter fabrics, narrow tapes, braids, and chair upholstery.

EXAMPLES

The invention is described in more detail below with reference to Examples. The characteristic values used in Examples were determined by the following methods.

A. Composite ratio

Based on the total quantity, which accounts for 100 parts by weight, of the polyolefin (A), the polyester (B), and the styrene - ethylene - butylene - styrene copolymer (C) used as components of the polymer alloy, the ratio of A/B/C [parts by weight] was calculated to provide the composite ratio.

B. Fineness

In an environment at a temperature of 20°C and a humidity of 65%RH, a 100 m fiber specimen taken from the fiber prepared in each Example was wound into a hank using an electric sizing reel manufactured by INTEC. The weight of the resulting hank was measured and its fineness (dtex) was calculated by the following equation. Here, five measurements were taken from a specimen, and their average was adopted as the fineness.

$$\text{Fineness (dtex)} = \text{weight (g) of 100 m fiber} \times 100$$

C. Strength and elongation percentage

The strength and elongation percentage of a specimen of the fiber prepared in each Example were calculated according to JIS L 1013 (2010) (Test method for chemical fiber filament yarn) 8.5.1. In an environment at a temperature of 20°C and a humidity of 65%RH, a tensile test was performed using Tensilon UTM-III-100, manufactured by Orientec Co., Ltd., under the conditions of an initial specimen length of 20 cm and tension speed of 20 cm/min. The strength (cN/dtex) was calculated by dividing the stress (cN) at the point showing the maximum load by the fineness (dtex) and the elongation percentage (%) was calculated by the following equation from the elongation (L1) at the point showing the maximum load and the initial specimen length (L0). Here, ten measurements were taken from a specimen, and the averages were adopted as the strength and elongation percentage.

$$\text{Elongation percentage (\%)} = \{(L1 - L0) / L0\} \times 100$$

D. Fineness variation U% (hi)

The fineness variation U% (half inert) was measured from the fiber specimen prepared in each Example using a Uster tester (4-CX, manufactured by Zellweger Uster) under the conditions of a measuring speed of 200 m/min, measuring time of 2.5 minutes, measuring fiber length of 500 m, and twisting frequency of 12,000/m (S-twist). Here, five measurements were taken from a specimen, and the average was adopted as the fineness variation U% (hi).

E. Fiber diameter CV (%)

Platinum-palladium alloy was deposited on the fiber specimen prepared in each Example and the cross section perpendicular to the fiber axis, i.e. the fiber's transverse cross section, was observed using an S-4000 scanning electron microscope (SEM) manufactured by Hitachi, Ltd., followed by taking a microphotograph of the fiber's transverse cross section. Observation was performed at magnifications of x100, x300, x500, x1,000, x3,000, x5,000, and x10,000, and a microphotograph was taken at the highest magnification where all single fibers in the specimen can be seen. In the photograph taken, the diameters of the single fibers were measured using image analysis software (WinROOF, manufactured by Mitani Corporation). When the specimen contained 50 or more single fibers, 50 single fibers were sampled at random to use for measurement of the single fiber diameter, whereas when the specimen contained only less than 50 single fibers, other specimens produced under the same conditions were added to permit single fiber diameter measurement for a total of 50 single fibers. The fiber's transverse cross section does not necessarily have a perfect circular shape, and in the case of a domain of a non-perfect circular shape, the diameter of the circumscribed circle was adopted as the diameter of the single fiber. After calculating the standard deviation (σ) of the single fiber diameter measurements and the average (X) of the single fiber diameter measurements, the fiber diameter CV% (%) was calculated by the following equation.

$$\text{Fiber diameter CV\% (\%)} = (\sigma / X) \times 100$$

F. Dispersion diameter of island component, dispersion diameter CV% of island component, and discontinuity of island component

The fiber specimen prepared in each Example was embedded in epoxy resin and the fiber was cut together with the epoxy resin in the perpendicular direction to the fiber axis using an ultramicrotome (LKB-2088, manufactured by LKB) to provide an ultrathin section with a thickness of about 100 nm. The resulting ultrathin section was dyed by leaving it for about 4 hours in gas of solid ruthenium tetroxide at room temperature and then the dyed face was cut with an ultramicrotome to provide an ultrathin section dyed with ruthenium tetroxide. A cross section of the dyed ultrathin section perpendicular to the fiber axis, that is, a transverse cross section of the fiber, was observed using a transmission electron microscope (TEM) (H-7100FA, manufactured by Hitachi, Ltd.) under the conditions of an accelerating voltage of 100 kV to take a microphotograph of the fiber's transverse cross section. Observation was performed at magnifications of x300, x500, x1,000, x3,000, x5,000, x10,000, x30,000, and x50,000, and a microphotograph was taken at the lowest magnification where 100 or more island domains were seen. In regard to the photographs thus taken, the diameters of 100 island component domains selected randomly from each photograph were determined using an image processing software tool (WINROOF, manufactured by Mitani Corporation), and the average of the measurements was adopted as the dispersion diameter (nm) of the island component domain. Each island component domain present in the fiber's transverse cross section does not necessarily have a perfect circular shape, and in the case of a domain of a non-perfect circular shape, the diameter of the circumscribed circle was adopted as the dispersion diameter of the island component domain.

When a sampled single fiber failed to have a fiber's transverse cross section containing 100 or more island component domains, a plurality of single fibers produced under the same conditions were used as specimens for fiber's transverse cross section observation, and when taking a microphotograph, photographing was performed at the highest magnification where the entire single fiber was observable. For the photographs thus taken, the dispersion diameters of the island component domains present in the fiber's transverse cross section of each single fiber were measured and the average of a total of 100 measured dispersion diameters of island component domains was adopted to represent the dispersion diameter of the island component domains.

From the dispersion diameters of 100 island component domains measured above, the standard deviation ($\sigma_{ALL}$) of the dispersion diameters of the island component domains and the average ($D_{ALL}$) of the dispersion diameters of the island component domains were calculated, and then the dispersion diameter CV% (%) of the island component domains was calculated by the following equation.

$$\text{Dispersion diameter CV\% (\%) of island component domains} = (\sigma_{ALL} / D_{ALL}) \times 100$$

To examine the discontinuity of the island component domains, five fiber's transverse cross sections of a single fiber were selected appropriately at intervals of at least 10,000 times or more of the diameter of the single fiber and photographed under a microscope. If the number of island domains and the shape of the sea-island structure differ among the fiber's transverse cross sections, the island component domains were judged to be discontinuous and the decision was given as "A" when the island component domains were discontinuous or "C" when the island component domains were not discontinuous.

G. Wear resistance

The fiber prepared in each Example was used as a specimen, and a tubular knitted fabric of about 2 g was prepared using a circular knitting machine (NCR-BL, manufactured by Eiko Industrial Co,. Ltd., diameter 3.5 inch (8.9 cm), 27-gage) and refined at 80°C for 20 minutes in an aqueous solution containing 1.5 g/L of sodium carbonate and 0.5 g/L of a surface active agent (Gran Up US-20, manufactured by Meisei Chemical Works, Ltd.), followed by rinsing with running water for 30 minutes and drying in a hot air drier at 60°C for 60 minutes. The refined tubular knitted fabric was dry-heat set at 135°C for 1 minute and 1.3 wt% of Kayalon Polyester Blue UT-YA manufactured by Nippon Kayaku Co., Ltd. was added as a disperse dye to the dry-heat-set tubular knitted fabric specimen, followed by dyeing in a dyeing solution adjusted to pH 5.0 at 130°C for 45 minutes at a bath ratio of 1:100. Then, it was rinsed with running water for 30 minutes and dried in a hot air drier at 60°C for 60 minutes. The dyed tubular knitted fabric was subjected to dry-heat setting at 135°C for 1 minute for finishing. In the case where a cationic dyeable polyester was used as the polyester (B), 1.0 wt% of Kayacryl Blue 2 RL-ED, manufactured by Nippon Kayaku Co., Ltd., was added as a cationic dye and then the specimen was dyed in a dye solution adjusted to pH 4.0 under the conditions of a bath ratio of 1:100, a dyeing temperature of 120°C, and a dyeing period of 40 minutes.

Wear resistance evaluation was carried out according to JIS L 1076 (2012) (Woven fabric and knitted fabric pilling test method) 7.3 "Appearance retention type test machine method". The finish-set tubular-knitted specimen prepared above was subjected to abrasion test under the conditions of a press load of 3.92 N and 20 repetitions of rubbing and the discoloration of the specimen was evaluated and rated according to a discoloration gray scale as specified in JIS L 0804 (2004). After the wear resistance test, furthermore, the fibrils of fiber in the worn portion were observed under a magnifying glass at a magnification of x30 and evaluated according to a four level criterion for ratings of S, A, B, or C. The decision was made based on mutual consent among five testers having five-year or longer experience in this kind of testing. To show the evaluation results, S represents the highest quality level, and A, B, and C represent lower, still lower, and the lowest quality levels, respectively.

Fibrils: Evaluated according to the criterion given below.

S: No fibrils are found, and no differences appear to be caused by abrasion.
A: A few fibrils are found, but no significant differences appear to be caused by abrasion.
B: Significant fibrils are found, and damage caused by abrasion is found.
C: A large amount of fibrils are found, and considerable damage caused by abrasion is found.

H. Dyeing levelness and quality

The finish-set tubular-knitted fabric specimen prepared in the above section G was evaluated according to a four level criterion for ratings of S, A, B, or C. A decision was made based on mutual consent among five testers having five-year or longer experience in this kind of quality testing. To show the evaluation results, S represents the highest quality level, and A, B, and C represent lower, still lower, and the lowest quality levels, respectively.

Dyeing levelness: Evaluated according to the criterion given below.

S: The specimen is dyed very uniformly, and no unevenness in dyeing is found.
A: The specimen is dyed almost uniformly, and almost no unevenness in dyeing is found.
B: The specimen is not dyed uniformly almost in any portion, and slight unevenness in dyeing is found.
C: The specimen is not dyed uniformly, and significant unevenness in dyeing is found.

Quality: Evaluated according to the criterion given below.

S: No fuzzing is found, and quality is very high.
A: No significant fuzzing is found, and quality is high.
B: Fuzzing is found, and quality is poor.
C: Heavy fuzzing is found, and quality is very poor.

(Example 1)

First, 70 parts by weight of polypropylene (PP) (Novatec (registered trademark) MA2, manufactured by Japan Polypropylene Corporation), 28 parts by weight of polyethylene terephthalate (PET) (T701 T, manufactured by Toray Industries, Inc.), and 2 parts by weight of the styrene - ethylene - butylene - styrene copolymer (C) (styrene block 25 parts by weight, ethylene block/ butylene block = 0.25) were mixed and kneaded in a twin screw extruder at a kneading temperature of 280°C. A strand was discharged from the twin screw extruder and it was then cooled in water and cut by a pelletizer at intervals of about 5 mm to provide pellets. The pellets obtained were vacuum-dried at 150°C for 12 hours and supplied to an extruder type melt-spinning machine in which they were melted and discharged through a spinning nozzle (discharge hole size 0.18 mm, discharge hole length 0.23 mm, number of holes 36, round holes) at a discharge rate of 31.5 g/min and a spinning temperature of 285°C to provide a spun yarn. These spun threads were cooled in a cooling air flow with an air temperature of 20°C and flow speed of 25 m/min, collected while supplying oil from an oil feeder, taken up by a first godet roller rotating at 3,000 m/min, wound up by a winder via a second godet roller rotating at the same speed as the first godet roller to provide an unstretched yarn of 105 dtex-36f. The unstretched yarn obtained was stretched under the conditions of a first hot roller temperature of 90°C, second hot roller temperature of 130°C, and draw ratio of 2.1 to provide a stretched yarn of 50 dtex-36f. Table 1 shows evaluation results on the fiber characteristics and fabric characteristics of the resulting fiber.

(Examples 2 to 6)

Except that the styrene - ethylene - butylene - styrene copolymer (C) contains a functional group as given in Table 1, the same procedure as in Example 1 was carried out to prepare a stretched yarn. Table 1 shows evaluation results on the fiber characteristics and fabric characteristics of the resulting fiber.

(Examples 7 to 11)

Except that the styrene block (C1) in the styrene - ethylene - butylene - styrene copolymer (C) had a content as given in Table 2, the same procedure as in Example 5 was carried out to prepare a stretched yarn. Table 2 shows evaluation results on the fiber characteristics and fabric characteristics of the resulting fiber.

(Examples 12 to 16)

Except that the ethylene block (C2) and the butylene block (C3) in the styrene - ethylene - butylene - styrene copolymer (C) had a weight ratio (C2/C3) as given in Table 2, the same procedure as in Example 5 was carried out to prepare a stretched yarn. Table 2 shows evaluation results on the fiber characteristics and fabric characteristics of the resulting fiber.

(Comparative example 1 and Examples 17 to 23)

Except that the polyolefin (A), the polyester (B), and the styrene - ethylene - butylene - styrene copolymer (C) had a composite ratio as given in Table 3, the same procedure as in Example 5 was carried out to prepare a stretched yarn. Table 3 shows evaluation results on the fiber characteristics and fabric characteristics of the resulting fiber.

In Comparative example 1, the styrene - ethylene - butylene - styrene copolymer (C) was not present and the compatibility between polypropylene and polyethylene terephthalate was so low that the dispersion diameter of the island component was large whereas the dispersion diameter CV% of the island component was high, resulting in a yarn that was high in both the fineness variation U% (hi) and the fiber diameter CV%, insufficiently low in the uniformity in the fiber's length direction and the uniformity in fiber diameter among the single fibers, considerably large in dyeing unevenness, and very poor in dyeing levelness. In addition, the interfacial adhesion between polypropylene and polyethylene terephthalate was so weak that the resulting yarn was low in wear resistance, which lead to a finish-set tubular-knitted fabric suffering from heavy fuzzing, indicating a very low quality.

(Examples 24 to 30)

Except that the polyester (B) used was polypropylene terephthalate (PPT) (Corterra (registered trademark) CP513000, manufactured by Shell) in Example 24, polybutylene terephthalate (PBT) (Toraycon (registered trademark) 1100 S, manufactured by Toray Industries, Inc.) in Example 25, polyethylene naphthalate (PEN) (PN640, manufactured by Toyobo Co., Ltd.) in Example 26, polybutylene succinate (PBS) (Bionolle (registered trademark) 1010, manufactured by Showa Denko K.K.) in Example 27, polylactic acid (PLA) (6201 D, manufactured by Nature Works LLC) in Example 28, polyglycolic acid (PGA) (Kuredux (registered trademark) 100 R60, manufactured by Kureha Corporation) in Example 29, and polycaprolactone (PCL) (Placcel (registered trademark) H1P, manufactured by Daicel Corporation) in Example 30, the same procedure as in Example 5 was carried out to prepare a stretched yarn. Table 4 shows evaluation results on the fiber characteristics and fabric characteristics of the resulting fiber.

(Examples 31 to 35)

Except that the polyester (B) used was polyethylene terephthalate that was 10 mol% copolymerized with isophthalic acid (IPA) as dicarboxylic acid component in Example 31, polyethylene terephthalate 1.5 mol% copolymerized with 5-sulfoisophthalic acid sodium (SSIA) as dicarboxylic acid component in Example 32, polyethylene terephthalate 30 mol% copolymerized with 1,4-cyclohexanedicarboxylic acid (CHDC) as dicarboxylic acid component in Example 33, polyethylene terephthalate 30 mol% copolymerized with 1,4-cyclohexanedimethanol (CHDM) as diol component in Example 34, and polyethylene terephthalate 5.0 wt% copolymerized with polyethylene glycol (PEG) (PEG1000, manufactured by Sanyo Chemical Industries Ltd., number average molecular weight 1000 g/mol) as diol component in Example 35, the same procedure as in Example 5 was carried out to prepare a stretched yarn. Table 5 shows evaluation results on the fiber characteristics and fabric characteristics of the resulting fiber.

(Examples 36 to 39)

Except that the polyolefin (A) used was polymethylpentene (PMP) (DX820, manufactured by Mitsui Chemicals, Inc.) instead of polypropylene, which was used in Example 5, 28, 32, and 34) and that the kneading temperature was 260°C, the same procedure as in Examples 5, 28, 32, and 34 was carried out to prepare a stretched yarn. Table 5 shows evaluation results on the fiber characteristics and fabric characteristics of the resulting fiber.

(Comparative examples 2 to 8)

Except that the compatibilizer (C) used was maleic anhydride modified polyethylene (Admer (registered trademark) LF128, manufactured by Mitsui Chemicals, Inc.) in Comparative example 2, maleic anhydride modified polypropylene (Yumex (registered trademark) 1010, manufactured by Sanyo Chemical Industries Ltd.) in Comparative example 3, a maleic anhydride modified ethylene - butene copolymer (Tafmer (registered trademark) MH7020, manufactured by Mitsui Chemicals, Inc.) in Comparative example 4, a styrene - ethylene - propylene - styrene copolymer (Septon (registered trademark) 2004, manufactured by Kuraray Co., Ltd.) in Comparative example 5, a hydroxyl group modified styrene - ethylene - ethylene - propylene - styrene copolymer (Septon HG-252, manufactured by Kuraray Co., Ltd.) in Comparative example 6, a styrene - butylene - styrene copolymer (Toughprene (registered trademark) A, manufactured by Asahi Kasei Corporation) in Comparative example 7, and an ethylene - glycidylmethacrylate copolymer (Bondfast (registered trademark) E, manufactured by Sumitomo Chemical Co., Ltd.) in Comparative example 8, the same procedure as in Example 5 was carried out to prepare a stretched yarn. Table 6 shows evaluation results on the fiber characteristics and fabric characteristics of the resulting fiber.

Regardless of the type of compatibilizer used, both the compatibility and the interfacial adhesion between polypropylene and polyethylene terephthalate were so small in all cases that the resulting yarns failed to have good mechanical characteristics, high wear resistance, high dyeing levelness, and high quality simultaneously.

[Table 1]

[Table 1]

| | | | Example 1 | Example 2 | Example 3 | Example 4 | Example 5 | Example 6 |
|---|---|---|---|---|---|---|---|---|
| Sea-island composite conditions | polyolefin (A) | polymer type | PP | PP | PP | PP | PP | PP |
| | polyester (B) | polymer type | PET | PET | PET | PET | PET | PET |
| | SEBS (C) | styrene block C1 [parts by weight] | 25 | 25 | 25 | 25 | 25 | 25 |
| | | ethylene block/ butylene block (C2/C3) | 0.25 | 0.25 | 0.25 | 0.25 | 0.25 | 0.25 |
| | | functional group | - | hydroxyl group | carboxyl group | anhydride group | amino group | imino group |
| | composite ratio | A/B/C [parts by weight] | 70/28/2 | 70/28/2 | 70/28/2 | 70/28/2 | 70/28/2 | 70/28/2 |
| | sea-island structure formed method | | alloy based | alloy based | alloy based | alloy based | alloy based | alloy based |
| Fiber characteristics of polymer alloy fiber | fineness [dtex] | | 50 | 50 | 50 | 50 | 50 | 50 |
| | strength [cN/dtex] | | 2.8 | 3.2 | 3.1 | 3.5 | 3.8 | 3.7 |
| | elongation percentage [%] | | 36 | 37 | 34 | 36 | 35 | 36 |
| | fineness variation U% (hi) [%] | | 1.5 | 1.4 | 1.4 | 1.2 | 0.8 | 0.8 |
| | fiber diameter CV% [%] | | 2.3 | 2.1 | 2.2 | 1.9 | 0.8 | 0.9 |
| | dispersion diameter of island component domains [nm] | | 740 | 620 | 630 | 470 | 280 | 300 |
| | dispersion diameter of island component domains CV% [%] | | 48 | 43 | 41 | 35 | 19 | 21 |
| | discontinuity of island component | | A | A | A | A | A | A |

EP 3 533 909 B1

16

(continued)

| Fabric characteristics of polymer alloy fiber | | Example 1 | Example 2 | Example 3 | Example 4 | Example 5 | Example 6 |
|---|---|---|---|---|---|---|---|
| wear resistance | discoloration [rating] | 3 | 3-4 | 3-4 | 4 | 4-5 | 4 |
| wear resistance | fibrils | A | A | A | A | S | A |
| dyeing levelness | | A | A | A | A | S | S |
| quality | | A | A | A | A | S | S |

PP: polypropylene, PET: polyethylene terephthalate, SEBS: styrene - ethylene - butylene - styrene copolymer

[Table 2]

EP 3 533 909 B1

[Table 2]

| | | | Example 7 | Example 8 | Example 9 | Example 10 | Example 11 | Example 12 | Example 13 | Example 14 | Example 15 | Example 16 |
|---|---|---|---|---|---|---|---|---|---|---|---|---|
| Sea-island composite conditions | polyolefin (A) | polymer type | PP | PP | PP | PP | PP | PP | PP | PP | PP | PP |
| | polyester (B) | polymer type | PET | PET | PET | PET | PET | PET | PET | PET | PET | PET |
| | SEBS (C) | styrene block C1 [parts by weight] | 5 | 15 | 35 | 40 | 65 | 25 | 25 | 25 | 25 | 25 |
| | | ethylene block/ butylene block (C2/C3) | 0.25 | 0.25 | 0.25 | 0.25 | 0.25 | 0.05 | 0.18 | 0.67 | 1.5 | 4.0 |
| | | functional group | amino group | amino group | amino group | amino group | amino group | amino group | amino group | amino group | amino group | amino group |
| | composite ratio | A/B/C [parts by weight] | 70/28/2 | 70/28/2 | 70/28/2 | 70/28/2 | 70/28/2 | 70/28/2 | 70/28/2 | 70/28/2 | 70/28/2 | 70/28/2 |
| | sea-island structure formed method | | alloy based | alloy based | alloy based | alloy based | alloy based | alloy based | alloy based | alloy based | alloy based | alloy based |
| Fiber cha racteristi cs of polymer alloy fiber | fineness [dtex] | | 50 | 50 | 50 | 50 | 50 | 50 | 50 | 50 | 50 | 50 |
| | strength [cN/dtex] | | 2.9 | 3.3 | 3.9 | 4.Q | 4.1 | 4.0 | 3.9 | 3.5 | 3.1 | 2.9 |
| | elongation percentage [%] | | 31 | 35 | 34 | 36 | 35 | 32 | 35 | 34 | 32 | 31 |
| | fineness variation U% (hi) [%] | | 1.4 | 1.3 | 0.7 | 0.9 | 1.4 | 0.7 | 0.7 | 1.2 | 1.4 | 1.5 |
| | fiber diameter CV% [%] | | 2.2 | 2.0 | 0.8 | 1.4 | 2.1 | 0.7 | 0.8 | 1.9 | 2.4 | 2.5 |
| | dispersion diameter of island component domains [nm] | | 600 | 480 | 270 | 390 | 590 | 250 | 270 | 430 | 640 | 710 |
| | dispersion diameter of island component domains CV% [%] | | 43 | 40 | 20 | 32 | 46 | 17 | 19 | 38 | 47 | 49 |
| | discontinuity of island component | | A | A | A | A | A | A | A | A | A | A |

(continued)

| | | | Example 7 | Example 8 | Example 9 | Example 10 | Example 11 | Example 12 | Example 13 | Example 14 | Example 15 | Example 16 |
|---|---|---|---|---|---|---|---|---|---|---|---|---|
| Fabric characteristics of polymer alloy fiber | wear resistance | discoloration [rating] | 4-5 | 4-5 | 4-5 | 3-4 | 3 | 3 | 4 | 4-5 | 4-5 | 4-5 |
| | | fibrils | S | S | S | A | A | A | A | S | S | S |
| | dyeing levelness | | A | A | S | S | A | S | S | A | A | A |
| | quality | | S | S | S | A | A | A | A | S | S | S |
| PP: polypropylene, PET: polyethylene terephthalate, SEBS: styrene - ethylene - butylene - styrene copolymer | | | | | | | | | | | | |

[Table 3]

[Table 3]

[Table 3]

| | | | Comparative example 1 | Example 17 | Example 18 | Example 19 | Example 20 | Example 21 | Example 22 | Example 23 |
|---|---|---|---|---|---|---|---|---|---|---|
| Sea-island composite conditions | polyolefin (A) | polymer type | PP | PP | PP | PP | PP | PP | PP | PP |
| | polyester (B) | polymer type | PET | PET | PET | PET | PET | PET | PET | PET |
| | SEBS (C) | styrene block C1 [parts by weight] | 25 | 25 | 25 | 25 | 25 | 25 | 25 | 25 |
| | | ethylene block/ butylene block (C2/C3) | 0.25 | 0.25 | 0.25 | 0.25 | 0.25 | 0.25 | 0.25 | 0.25 |
| | | functional group | amino group | amino group | amino group | amino group | amino group | amino group | amino group | amino group |
| | composite ratio | A/B/C [parts by weight] | 70/30/0 | 70/29.7/0.3 | 70/24/6 | 70/15/15 | 8/9012 | 28/70/2 | 43/55/2 | 90/8/2 |
| | sea-island structure formed method | | alloy based | alloy based | alloy based | alloy based | alloy based | alloy based | alloy based | alloy based |
| Fiber characteristics of polymer alloy fiber | fineness [dtex] | | 50 | 50 | 50 | 50 | 50 | 50 | 50 | 50 |
| | strength [cN/dtex] | | 1.8 | 2.9 | 4.1 | 4.5 | 4.9 | 3.7 | 2.5 | 5.1 |
| | elongation percentage [%] | | 25 | 34 | 37 | 36 | 38 | 34 | 31 | 37 |
| | fineness variation U% (hi) [%] | | 6.2 | 1.5 | 0.6 | 0.3 | 0.4 | 0.7 | 1.5 | 0.3 |
| | fiber diameter CV% [%] | | 7.1 | 2.4 | 0.8 | 0.3 | 0.4 | 0.9 | 2.5 | 0.4 |
| | dispersion diameter of island component domains [nm] | | 1490 | 810 | 170 | 90 | 160 | 270 | 970 | 140 |
| | dispersion diameter of island component domains CV% [%] | | 68 | 48 | 16 | 10 | 15 | 18 | 49 | 12 |
| | discontinuity of island component | | A | A | A | A | A | A | A | A |

EP 3 533 909 B1

22

(continued)

| Fabric characteristics of polymer alloy fiber | | Comparative example 1 | Example 17 | Example 18 | Example 19 | Example 20 | Example 21 | Example 22 | Example 23 |
|---|---|---|---|---|---|---|---|---|---|
| wear resistance | discoloration [rating] | 1-2 | 3 | 5 | 5 | 3 | 3 | 3-4 | 5 |
| wear resistance | fibrils | C | A | S | S | A | A | A | S |
| dyeing levelness | | C | A | S | S | S | S | A | S |
| quality | | C | A | S | S | A | A | A | S |

PP: polypropylene, PET: polyethylene terephthalate, SEBS: styrene - ethylene - butylene - styrene copolymer

[Table 4]

[Table 4]

|  |  |  | Example 24 | Example 25 | Example 26 | Example 27 | Example 28 | Example 29 | Example 30 |
|---|---|---|---|---|---|---|---|---|---|
| Sea-island composite conditions | polyolefin (A) | polymer type | PP | PP | PP | PP | PP | PP | PP |
|  | polyester (B) | polymer type | PPT | PBT | PEN | PBS | PLA | PGA | PCL |
|  | SEBS (C) | styrene block C1 [parts by weight] | 25 | 25 | 25 | 25 | 25 | 25 | 25 |
|  |  | ethylene block/butylene block (C2/C3) | 0.25 | 0.25 | 0.25 | 0.25 | 0.25 | 0.25 | 0.25 |
|  |  | functional group | amino group | amino group | amino group | amino group | amino group | amino group | amino group |
|  | composite ratio | A/B/C [parts by weight] | 70/28/2 | 70/28/2 | 70/28/2 | 70/28/2 | 70/28/2 | 70/28/2 | 70/28/2 |
|  | sea-island structure formed method | | alloy based | alloy based | alloy based | alloy based | alloy based | alloy based | alloy based |
| Fiber characteristics of polymer alloy fiber | fineness [dtex] | | 50 | 50 | 50 | 50 | 50 | 50 | 50 |
|  | strength [cN/dtex] | | 3.6 | 3.7 | 3.5 | 3.1 | 2.5 | 2.7 | 3.0 |
|  | elongation percentage [%] | | 36 | 38 | 34 | 36 | 31 | 35 | 34 |
|  | fineness variation U% (hi) [%] | | 0.9 | 1.0 | 1.0 | 1.3 | 1.5 | 1.4 | 1.4 |
|  | fiber diameter CV% [%] | | 1.2 | 1.4 | 1.5 | 2.0 | 2.4 | 2.1 | 2.2 |
|  | dispersion diameter of island component domains [nm] | | 370 | 410 | 430 | 550 | 960 | 890 | 820 |
|  | dispersion diameter of island component domains CV% [%] | | 26 | 34 | 33 | 41 | 50 | 47 | 45 |
|  | discontinuity of island component | | A | A | A | A | A | A | A |

(continued)

| Fabric characteristics of polymer alloy fiber | | | Example 24 | Example 25 | Example 26 | Example 27 | Example 28 | Example 29 | Example 30 |
|---|---|---|---|---|---|---|---|---|---|
| | wear resistance | discoloration [rating] | 4-5 | 4-5 | 4 | 3-4 | 3 | 3 | 3 |
| | | fibrils | S | S | A | A | A | A | A |
| | dyeing levelness | | S | S | S | A | A | A | A |
| | quality | | S | S | S | A | A | A | S |

PP: polypropylene, PPT: polypropylene terephthalate, PBT: polybutylene terephthalate, PEN: polyethylene naphthalate, PBS: polybutylene succinate, PLA: polylactic acid, PGA: polyglycolic acid, PCL: polycaprolactone, SEBS: styrene - ethylene - butylene - styrene copolymer

[Table 5]

[Table 5]

[Table 5]

| | | | Example 31 | Example 32 | Example 33 | Example 34 | Example 35 | Example 36 | Example 37 | Example 38 | Example 38 |
|---|---|---|---|---|---|---|---|---|---|---|---|
| Sea-island composite conditions | polyolefin (A) | polymer type | PP | PP | PP | PP | PP | PMP | PMP | PMP | PMP |
| | polyester (B) | polymer type | copolymer PET-1 | copolymer PET-2 | copolymer PET-3 | copolymer PET-4 | copolymer PET-5 | PET | PLA | copolymer PET-2 | copolymer PET-4 |
| | SEBS (C) | styrene block C1 [parts bv weight] | 25 | 25 | 25 | 25 | 25 | 25 | 25 | 25 | 25 |
| | | ethylene block/ butylene block (C2/C3) | 0.25 | 0.25 | 0.25 | 0.25 | 0.25 | 0.25 | 0.25 | 0.25 | 0.25 |
| | | functional group | amino group | amino group | amino group | amino qroup | amino group | amino group | amino group | amino group | amino group |
| | composite ratio | A/B/C [parts by weight] | 70/28/2 | 70/28/2 | 70/28/2 | 70/28/2 | 1012812 | 7012812 | 70/28/2 | 70/28/2 | 70/28/2 |
| | sea-island structure formed method | | alloy based | alloy based | alloy based | alloy based | alloy based | alloy based | alloy based | alloy based | alloy based |
| Fiber characteristics of polymer alloy fiber | fineness [dtex] | | 50 | 50 | 50 | 50 | 50 | 50 | 50 | 50 | 50 |
| | strength [cN/dtex] | | 3.6 | 3.3 | 3.5 | 3.6 | 3.6 | 2.0 | 1.4 | 1.7 | 1.9 |
| | elongation percentage [%] | | 35 | 37 | 38 | 36 | 37 | 35 | 36 | 34 | 37 |
| | fineness variation U% (hi) [%] | | 0.8 | 0.8 | 1.0 | 0.9 | 1.0 | 0.8 | 1.5 | 0.9 | 0.9 |
| | fiber diameter CV% [%] | | 0.9 | 0.9 | 1.5 | 1.3 | 1.4 | 0.8 | 2.5 | 1.2 | 1.3 |
| | dispersion diameter of island component domains [nm] | | 280 | 290 | 420 | 400 | 410 | 270 | 940 | 350 | 380 |
| | dispersion diameter of island component domains CV% [%] | | 20 | 19 | 32 | 32 | 34 | 20 | 50 | 23 | 31 |
| | discontinuity of island component | | A | A | A | A | A | A | A | A | A |

EP 3 533 909 B1

28

(continued)

| | | Example 31 | Example 32 | Example 33 | Example 34 | Example 35 | Example 36 | Example 37 | Example 38 | Example 38 |
|---|---|---|---|---|---|---|---|---|---|---|
| Fabric characteristics of polymer alloy fiber | wear resistance | discoloration [rating] | 4-5 | 4-5 | 4 | 4 | 4 | 4-5 | 3 | 4-5 | 4 |
| | | fibrils | S | S | A | A | A | S | A | S | A |
| | dyeing levelness | | S | S | S | S | S | S | A | S | S |
| | quality | | S | S | S | S | S | S | A | S | S |

PP: polypropylene, PMP: polymethylpentene, copolymer PET-1: IPAcopolymer PET, copolymer PET-2: SSJAcopolymer PET, copolymer PET-3: CHDCopolymer PET, copolymer PET-4: CHDMcopolymer PET, copolymer PET-5: PEGcopolymer PET, PET: polyethylene terephthalate, PLA: polylactic acid, SEBS: styrene - ethylene - butylene - styrene copolymer

[Table 6]

[Table 6]

[Table 6]

| | | | Comparative example 2 | Comparative example 3 | Comparative example 4 | Comparative example 5 | Comparative example 6 | Comparative example 7 | Comparative example 8 |
|---|---|---|---|---|---|---|---|---|---|
| Sea-island composite conditions | polyolefin (A) | polymer type | PP | PP | PP | PP | PP | PP | PP |
| | polyester (B) | polymer type | PET | PET | PET | PET | PET | PET | PET |
| | compatibilizer (C) | polymer type | compatibilizer - 1 | compatibilizer - 2 | compatibilizer - 3 | compatibilizer - 4 | compatibilizer - 5 | compatibilizer - 6 | compatibilizer - 7 |
| | | functional group | anhydride group | anhydride group | anhydride group | - | hydroxyl group | - | epoxy group |
| | composite ratio | A/B/C [parts by weight] | 70/28/2 | 70/28/2 | 70/28/2 | 70/28/2 | 70/28/2 | 70/28/2 | 70/28/2 |
| | sea-island structure formed method | | alloy based | alloy based | alloy based | alloy based | alloy based | alloy based | alloy based |
| Fiber characteristics of polymer alloy fiber | fineness [dtex] | | 50 | 50 | 50 | 50 | 50 | 50 | 50 |
| | strength [cN/dtex] | | 2.0 | 2.4 | 2.1 | 2.3 | 2.7 | 2.5 | 1.9 |
| | elongation percentage [%] | | 25 | 31 | 24 | 29 | 32 | 30 | 26 |
| | fineness variation U% (hi) [%] | | 4.9 | 1.8 | 1.8 | 2.0 | 1.7 | 1.9 | 5.7 |
| | fiber diameter CV% [%] | | 5.4 | 2.7 | 2.8 | 3.2 | 2.7 | 3.0 | 6.3 |
| | dispersion diameter of island component domains [nm] | | 1250 | 770 | 790 | 870 | 760 | 840 | 1360 |
| | dispersion diameter of island component domains CV% [%] | | 62 | 53 | 54 | 57 | 52 | 55 | 65 |
| | discontinuity of island component | | A | A | A | A | A | A | A |

(continued)

| | | | Comparative example 2 | Comparative example 3 | Comparative example 4 | Comparative example 5 | Comparative example 6 | Comparative example 7 | Comparative example 8 |
|---|---|---|---|---|---|---|---|---|---|
| Fabric characteristics of polymer alloy fiber | wear resistance | discoloration [rating] | 2 | 2-3 | 2-3 | 2-3 | 2-3 | 2 | 1-2 |
| | | fibrils | C | B | B | B | B | C | C |
| | dyeing levelness | | C | B | B | C | B | B | C |
| | quality | | C | B | B | B | B | C | C |

PP: polypropylene, PET polyethylene terephthalate, compatibilizer - 1: maleic anhydride modified polyethylene, compatibilizer - 2: maleic anhydride modified polypropylene, compatibilizer - 3: maleic anhydride modified ethylene - butene copolymer, compatibilizer - 4: styrene - ethylene - propylene - styrene copolymer, compatibilizer - 5: hydroxyl group modified styrene - ethylene - ethylene - propylene - styrene copolymer, compatibilizer - 6: styrene - butylene - styrene copolymer, compatibilizer - 7: ethylene - glycidylmethacrylate copolymer

INDUSTRIAL APPLICABILITY

The polymer alloy fiber according to the present invention has both good properties of polyolefin and those of polyester, has a depressed variation in fiber diameter among single fibers, has excellent mechanical properties and high abrasion resistance, and suffers from little dyeing unevenness, and being suitable as a fiber structure.

## Claims

1.  A polymer alloy fiber comprising a polypropylene (A), a polyester (B), and a styrene - ethylene - butylene - styrene copolymer (C), having a fiber diameter CV% of 0.1% to 2.5%, and containing an island component with a dispersion diameter of 1 to 1,000 nm in the fiber's transverse cross section, wherein the main constituent component of the polyester (B) is one selected from the group consisting of an aromatic dicarboxylic acid, an aromatic diol and an aromatic hydroxycarboxylic acid.

2.  The polymer alloy fiber as set forth in claim 1, wherein the styrene - ethylene - butylene - styrene copolymer (C) accounts for 0.1 to 30.0 parts by weight relative to the total quantity, which accounts for 100 parts by weight, of the polypropylene (A), the polyester (B), and the styrene - ethylene - butylene - styrene copolymer (C).

3.  The polymer alloy fiber as set forth in either claim 1 or 2, wherein the styrene - ethylene - butylene - styrene copolymer (C) contains 15.0 to 45.0 parts by weight of the styrene block (C1).

4.  The polymer alloy fiber as set forth in any one of claims 1 to 3, wherein the styrene - ethylene - butylene - styrene copolymer (C) has a weight ratio (C2/C3) between the ethylene block (C2) and the butylene block (C3) of 0.1 to 1.0.

5.  The polymer alloy fiber as set forth in any one of claims 1 to 4, wherein the styrene - ethylene - butylene - styrene copolymer (C) contains at least one functional group selected from the group consisting of anhydride groups, amino groups, and imino groups.

6.  The polymer alloy fiber as set forth in any one of claims 1 to 5 having a sea-island structure containing the polyolefin (A) as sea component and the polyester (B) as island component.

7.  A fiber structure at least partly comprising the polymer alloy fiber as set forth in any one of claims 1 to 6.

## Patentansprüche

1.  Polymerlegierungsfaser, die ein Polypropylen (A), einen Polyester (B) und ein Styren-Ethylen-Butylen-Styren-Copolymer (C) umfasst, einen Faserdurchmesser CV% von 0,1% bis 2,5% aufweist und eine Inselkomponente mit einem Dispersionsdurchmesser von 1 bis 1.000 nm in der Querrichtung der Faser enthält, wobei der Hauptbestandteil des Polyesters (B) aus der Gruppe ausgewählt ist, die aus einer aromatischen Dicarbonsäure, einem aromatischen Diol und einer aromatischen Hydroxycarbonsäure besteht.

2.  Polymerlegierungsfaser nach Anspruch 1, wobei das Styren-Ethylen-Butylen-Styren-Copolymer (C) 0,1 bis 30,0 Gewichtsteile relativ zu der Gesamtmenge von 100 Gewichtsteilen des Polypropylens (A), des Polyesters (B) und des Styren-Ethylen-Butylen-Styren-Copolymers (C) ausmacht.

3.  Polymerlegierungsfaser nach Anspruch 1 oder 2, wobei das Styren-Ethylen-Butylen-Styren-Copolymer (C) 15,0 bis 45,0 Gewichtsteile des Styrenblocks (C1) enthält.

4.  Polymerlegierungsfaser nach einem der Ansprüche 1 bis 3, wobei das Styren-Ethylen-Butylen-Styren-Copolymer (C) ein Gewichtsverhältnis (C2/C3) zwischen dem Ethylenblock (C2) und dem Butylenblock (C3) von 0,1 bis 1,0 aufweist.

5.  Polymerlegierungsfaser nach einem der Ansprüche 1 bis 4, wobei das Styren-Ethylen-Butylen-Styren-Copolymer (C) wenigstens eine Funktionsgruppe enthält, die aus der Gruppe ausgewählt ist, die aus Anhydridgruppen, Aminogruppen und Iminogruppen besteht.

**6.** Polymerlegierungsfaser nach einem der Ansprüche 1 bis 5, die eine Meer-Insel-Struktur mit dem Polyolefin (A) als einer Meerkomponente und dem Polyester (B) als einer Inselkomponente aufweist.

**7.** Faserstruktur, die wenigstens teilweise aus der Polymerlegierungsfaser gemäß den Ansprüchen 1 bis 6 besteht.

**Revendications**

**1.** Fibre en alliage de polymères comprenant un polypropylène (A), un polyester (B) et un copolymère de styrène - éthylène - butylène - styrène (C), ayant un diamètre de fibre CV% de 0,1 % à 2,5 %, et contenant un composant île ayant un diamètre de dispersion de 1 à 1 000 nm dans la section transversale de la fibre, dans laquelle le composant principal du polyester (B) est un composant choisi dans le groupe constitué d'un acide dicarboxylique aromatique, d'un diol aromatique et d'un acide hydroxycarboxylique aromatique.

**2.** Fibre en alliage de polymères selon la revendication 1, dans laquelle le copolymère de styrène - éthylène - butylène - styrène (C) représente de 0,1 à 30,0 parties en poids par rapport à la quantité totale, qui représente 100 parties en poids, du polypropylène (A), du polyester (B), et du copolymère de styrène - éthylène - butylène - styrène (C).

**3.** Fibre en alliage de polymères selon la revendication 1 ou 2, dans laquelle le copolymère de styrène - éthylène - butylène - styrène (C) contient de 15,0 à 45,0 parties en poids du bloc styrène (C1).

**4.** Fibre en alliage de polymères selon l'une quelconque des revendications 1 à 3, dans laquelle le copolymère de styrène - éthylène - butylène - styrène (C) présente un rapport en poids (C2/C3) entre le bloc éthylène (C2) et le bloc butylène (C3) de 0,1 à 1,0.

**5.** Fibre en alliage de polymères selon l'une quelconque des revendications 1 à 4, dans laquelle le copolymère de styrène - éthylène - butylène - styrène (C) contient au moins un groupe fonctionnel choisi dans le groupe constitué par les groupes anhydride, les groupes amino et les groupes imino.

**6.** Fibre en alliage de polymères selon l'une quelconque des revendications 1 à 5, ayant une structure mer-île contenant la polyoléfine (A) comme composant mer et le polyester (B) comme composant île.

**7.** Structure fibreuse comprenant au moins en partie la fibre en alliage de polymères selon l'une quelconque des revendications 1 à 6.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI551852 A
- JP 2006077063 A
- JP 2011202289 A